# EUROPÄISCHE PATENTSCHRIFT

(11) **EP 2 671 776 B1**
(45) Veröffentlichungstag und Bekanntmachung des Hinweises auf die Patenterteilung: **11.11.2020**
(21) Anmeldenummer: 13001384.0
(22) Anmeldetag: 18.03.2013
(51) Int. Cl.: B62D 21/11, B62D 21/02, B62D 21/09, B60G 7/02

(54) **Tragbock für eine einen Querträger umfassende Tragkonstruktion für ein Kraftfahrzeug**
Mounting frame for a supporting structure comprising a cross-member for a motor vehicle
Chevalet pour une structure de support comprenant une traverse pour un véhicule automobile

(30) Priorität: 08.06.2012 DE 102012011416
(43) Veröffentlichungstag der Anmeldung: 11.12.2013
(73) Patentinhaber: MAN Truck & Bus SE, 80995 München (DE)
(72) Erfinder: Acer, Serkan, 87719 Mindelheim (DE); Noebauer, Andreas, 85735 Neufahrn (DE); Barnreiter, Robert, 81371 München (DE); Eberle, Andreas, 80687 München (DE); Vrecko, Alexander, 80997 München (DE); Ziehlke, Jürgen, 85146 Langenbach (DE); Mó, Daniel Concepcion, 09080-240 Santo André - SP (BR); Ueda, Oscar Massachi, 27510-080 Resende - RJ (BR)
(74) Vertreter: v. Bezold & Partner Patentanwälte - PartG mbB

(56) Entgegenhaltungen:
- EP-A1- 0 940 272
- EP-A1- 2 322 365
- EP-A2- 2 246 240
- WO-A2-2012/064183
- DE-A1-102009 033 826
- US-B2- 7 857 348

## Beschreibung

Die Erfindung betrifft einen Tragbock für eine einen Querträger umfassende Tragkonstruktion für ein Kraftfahrzeug und eine Tragkonstruktion mit einem solchen Tragbock.

US 7 857 348 B2 offenbart einen Tragbock für eine einen Querträger umfassende Tragkonstruktion eines Fahrzeugs, wobei der Tragbock Verbindungseinrichtungen für einen Querträger und einen Längsträger umfasst. Tragböcke, wie z.B. Längslenkerböcke für Nutzfahrzeuge wie z.B. Lastkraftwagen oder Omnibusse dienen im Wesentlichen der Weiterleitung von Fahrwerkskräften in den Fahrwerksaufbau. Aus DE 10 2008 045 008 A1 ist ein Multifunktionslagerbock bekannt, der Seitenwände aufweist, die zueinander gewinkelt angeordnet sind und die zur Versteifung des Multifunktionslagerblocks zumindest bereichsweise Einlagewände einfassen, die in einem Winkel zur Längsachse des Multifunktionslagerbocks verlaufen. Obwohl der Multifunktionslagerbock an sich gut funktioniert, ist dessen Herstellung aufwendig und erfordert stets die Herstellung zweier unterschiedlicher Multifunktionslagerböcke, nämlich einen, der ausgeführt ist, um an der einen Seite eines Querträgers angebracht zu werden (z.B. links) und einen anderen Multifunktionslagerblock, der ausgebildet ist, um an der anderen Seite des Querträgers angebracht zu werden (z.B. rechts).

Eine Aufgabe der Erfindung ist es, einen verbesserten und/oder alternativen Tragbock für ein Nutzfahrzeug wie z.B. ein Omnibus oder ein Lastkraftwagen zu schaffen.

Diese Aufgabe kann durch die Merkmale des Hauptanspruchs gelöst werden. Vorteilhafte Weiterbildungen sind den Unteransprüchen zu entnehmen.

Der erfindungsgemäße Tragbock für eine einen Querträger umfassende Tragkonstruktion für ein Kraftfahrzeug, insbesondere Nutzfahrzeug (z.B. Omnibus oder Lastkraftwagen), ist mit einer Verbindungseinrichtung für den Querträger versehen und ist so ausgebildet, dass er an beiden Seiten des Querträgers verwendbar ist. Das heißt, dass der erfindungsgemäße Tragbock in Bezug auf den Querträger zweckmäßig sowohl links als auch rechts verwendet werden kann. Dadurch können zumindest nahezu baugleiche Tragböcke an dem Querträger verwendet werden, woraus sich z.B. Kostenersparnisse ergeben (z.B. im Hinblick auf Herstellkosten, Maschinenkosten, Werkzeugkosten, Verwaltungskosten, etc.), aber auch eine Reduzierung von Sachnummern ermöglicht wird.

Vorzugsweise ist der Tragbock relativ zu einer Symmetrieebene zumindest so nahezu symmetrisch ausgeführt, um in Bezug auf den Querträger an beiden Seiten verwendet werden zu können.

Der Tragbock umfasst eine Verbindungseinrichtung für eine Spantkonstruktion (z.B. ein sich zweckmäßig parallel zu dem Querträger erstreckender Träger, z.B. ein U-Profil-Träger).

Der Tragbock umfasst vorzugsweise eine Vielzahl von Verbindungseinrichtungen, mittels denen die zu verbindenden Teile an den Tragbock montiert werden können. So umfasst der Tragbock z.B. eine Verbindungseinrichtung für eine Längslenkereinrichtung, eine Verbindungseinrichtung für einen Längsträger, eine Verbindungseinrichtung für zumindest einen zusätzlichen Querträger, eine Verbindungseinrichtung für eine Lenkeinrichtung, insbesondere eine Dreieckslenkereinrichtung, und/oder zumindest eine Verbindungseinrichtung für zumindest ein zusätzliches Funktionsteil, vorzugsweise eine Bremseinrichtung und/oder eine Zusatzverstrebung zur Verstärkung der Tragkonstruktion.

Es ist möglich, dass die Verbindungseinrichtung für die Spantkonstruktion die Symmetrieebene definiert.

Die Verbindungseinrichtung für den Querträger kann z.B. seitlich beabstandet sein zu der Symmetrieebene.

Die Verbindungseinrichtung für die Längslenkereinrichtung kann sich z.B. im Wesentlichen quer zu der Symmetrieebene erstrecken.

Die Verbindungseinrichtung für den Längsträger kann z.B. als Befestigungsfläche ausgebildet sein, die sich im Wesentlichen quer zu der Symmetrieebene erstreckt.

Die Verbindungseinrichtung für zumindest einen zusätzlichen Querträger ist vorzugsweise seitlich beabstandet zu der Symmetrieebene.

Der Tragbock kann zumindest eine Verbindungseinrichtung aufweisen, die als Flanschkonstruktion ausgeführt ist, die zweckmäßig vom Grundkörper des Tragbocks absteht, z.B. im Wesentlichen rechtwinklig, und/oder sich im Wesentlichen parallel zu dem Längsträger erstreckt.

Vorzugsweise weist der Tragbock zumindest eine Verbindungseinrichtung auf, die mindestens eine Befestigungsfläche umfasst, die zumindest ungefähr rechtwinklig zu der Längserstreckung des Querträgers, insbesondere zumindest ungefähr parallel zu der Längserstreckung des Längsträgers ausgerichtet ist. Alternativ oder ergänzend erstreckt sich die zumindest eine Befestigungsfläche vorzugsweise zumindest ungefähr vertikal. Das trifft vorzugsweise auf die Verbindungseinrichtung für den Längsträger und/oder die Verbindungseinrichtung für den zusätzlichen Querträger zu, die z.B. zu der gleichen Seite des Tragbocks abstehen und/oder sich im Wesentlichen parallel zueinander erstrecken können.

Es ist aber auch möglich, dass zumindest eine Verbindungseinrichtung eine Öffnung umfasst, in die das zu verbindende Element einsetzbar ist oder durch die das zu verbindende Element durchführbar ist. Bei einer besonders bevorzugten Ausführungsform umfasst der Tragbock eine Durchlass- oder Einsetzöffnung, die für den zusätzlichen Querträger ausgebildet ist.

Die Verbindungseinrichtung für die Spantkonstruktion kann z.B. zwei höhenmäßig voneinander beabstandete Flanschmittel aufweisen, wodurch zweckmäßig Zug- und Druckkräfte definiert weiterleitbar sind.

Die Verbindungseinrichtung für den Querträger und/oder die Verbindungseinrichtung für den zumindest einen zusätzlichen Querträger umfasst vorzugsweise zwei relativ zu der Symmetrieebene seitlich voneinander beabstandete Flanschmittel.

Die Verbindungseinrichtung für den Querträger und die Verbindungseinrichtung für die Spantkonstruktion erstrecken sich in unterschiedliche Richtungen, vorzugsweise in entgegengesetzte Richtungen.

Die Verbindungseinrichtung für den Längsträger ist vorzugsweise als Befestigungsfläche ausgeführt, die sich im Wesentlichen rechtwinklig erstreckt zu der Verbindungseinrichtung für den Querträger, der Verbindungseinrichtung für die Spantkonstruktion und/oder der Verbindungseinrichtung für den zusätzlichen Querträger.

Die Verbindungseinrichtung für den Querträger und die Verbindungseinrichtung für den zusätzlichen Querträger stehen vorzugsweise zu der gleichen Seite des Tragbocks ab und/oder sind so in einer Ebene angeordnet, dass der Querträger und der zusätzliche Querträger gleich breit oder sogar baugleich ausgeführt sein können.

Es ist möglich, dass die Verbindungseinrichtung für den Querträger und die Verbindungseinrichtung für das zusätzliche Funktionsteil in einer Ebene angeordnet sind. Alternativ oder ergänzend ist es auch möglich, dass die Verbindungseinrichtung für den Querträger und die Verbindungseinrichtung für das zusätzliche Funktionsteil zueinander seitlich beabstandet sind, vorzugsweise so, dass nach Anbinden des Querträgers an dessen Verbindungseinrichtung, die Oberfläche des Querträgers und die Oberfläche der Verbindungseinrichtung für das zusätzliche Funktionsteil eine Ebene bilden. Auf dieser Ebene kann zweckmäßig eine weitere Halteeinrichtung oder allgemein ein weiteres Funktionselement befestigt werden und zwar vorteilhaft ohne dass Distanzstücke oder andere Ausgleichsstücke verwendet werden müssen.

Die Verbindungseinrichtung für den Querträger ist vorzugsweise tiefer angeordnet als die Verbindungseinrichtung für die Spantkonstruktion und/oder die Verbindungseinrichtung für den Längsträger. Dadurch wird vorzugsweise ermöglicht, dass der Querträger unter dem Niveau der Spantkonstruktion und/oder unter dem Niveau des Längsträgers verlaufen kann.

Die Verbindungseinrichtung für den zusätzlichen Querträger ist vorzugsweise tiefer angeordnet als die Verbindungseinrichtung für den Querträger.

Der Grundkörper des Tragbocks wird vorzugsweise durch einen Stegabschnitt und einen vorzugsweise im Wesentlichen quer dazu verlaufenden Flanschabschnitt definiert. Der Stegabschnitt und der Flanschabschnitt bilden eine im Wesentlichen T-förmige Gestalt.

Die Erfindung umfasst nicht nur einen Tragbock, sondern auch eine Tragkonstruktion, insbesondere Rahmen- oder Lenkkonstruktion, für ein Kraftfahrzeug, vorzugsweise ein Nutzfahrzeug (z.B. ein Omnibus oder ein Lastkraftwagen). Die Tragkonstruktion umfasst zwei Tragböcke, die an beiden Seiten eines Querträgers angeordnet sind. Die Tragböcke können wie hierin beschrieben ausgeführt sein und sind somit insbesondere zumindest nahezu baugleich ausgeführt. Die erfindungsgemäße Tragkonstruktion zeichnet sich somit insbesondere dadurch aus, dass sowohl an der einen Seite des Querträgers (z.B. links) als auch an der anderen Seite des Querträgers (z.B. rechts) jeweils ein baugleicher Tragbock verwendet wird.

Die Tragkonstruktion umfasst zweckmäßig mit den Tragböcken verbundene Längsträger und/oder Spantkonstruktionen, wobei der Querträger vorzugsweise unter dem Niveau der Längsträger und/oder unter dem Niveau der Spantkonstruktionen verläuft, wodurch ein Höhenversatz erzeugt wird.

Die Spantkonstruktionen sind z.B. sich zweckmäßig parallel zu dem Querträger erstreckende Träger, z.B. U-Profil-Träger.

Die Tragkonstruktion weist vorzugsweise zwei Stützeinrichtungen auf, die zwischen dem Querträger und den Längsträgern und/oder den Spantkonstruktionen angeordnet sind und/oder die zumindest abschnittsweise innerhalb des Höhenversatzes angeordnet sind, z.B. um die Tragböcke auszusteifen und/oder um einen sprunghaften Kraftfluss, der ohne die Stützeinrichtungen durch den Höhenversatz auftreten würde, zumindest zu reduzieren oder zu glätten, wodurch zweckmäßig eine sanftere Kraftflussrichtungsänderung realisierbar ist.

Die Stützeinrichtungen dienen vorzugsweise zusätzlich als Tragböcke für eine Lenkeinrichtung, insbesondere Dreieckslenkereinrichtung.

Es ist möglich, dass zumindest der Grundkörper des Tragbocks und/oder zumindest der Grundkörper der Stützeinrichtung als Gussteil ausgeführt ist. Im Rahmen der Erfindung ist es durchaus möglich, dass an diese Gussteile z.B. zusätzliche Halteeinrichtungen montiert werden, z.B. angenietet, angeschraubt und/oder angeschweißt.

Zu erwähnen ist noch, dass die Längsträger und/oder die Spantkonstruktionen zweckmäßig herkömmliche Tragprofile umfassen können, vorzugsweise U-Profile. Der Querträger ist vorzugsweise ein U-Profil, ein T-Profil, ein Doppel-T- oder I-Profil, z.B. mit variierender Höhe.

Zu erwähnen ist außerdem, dass im Rahmen der Erfindung der Trackbock relativ zu der Symmetrieebene nicht vollkommen symmetrisch ausgeführt sein muss und/oder die Tragböcke auf den beiden Seiten des Querträgers nicht vollkommen gleich ausgeführt sein müssen. Es reicht zweckmäßig aus, dass sie sich gleichen.

Nachbearbeitungen, Fertigungstoleranzen, nachträgliche Montagen, Anbauteile, etc. sind durch die Erfindung ebenfalls umfasst.

Zu erwähnen ist außerdem, dass die mit dem Tragbock zu verbindenden Elemente (z.B. der Querträger, der Längsträger, der Längslenker, der zusätzliche Querträger, etc.) an dem Tragbock vorzugsweise unmittelbar befestigbar sind, aber auch durchaus Ausführungsformen möglich sind, in dem sie über zusätzliche Zwischenstücke mittelbar mit dem Tragbock verbunden sind.

Ferner ist zu erwähnen, dass die mittels "tiefer" und/oder "unter" in Beziehung stehenden Teile zweckmäßig in unterschiedlicher Höhe angeordnet sind, z.B. sich in einer Ebene erstrecken können, aber nicht zwingend müssen. Es ist z.B. auch möglich, dass sie versetzt zueinander angeordnet sind.

Ferner ist zu erwähnen, dass der Tragbock vorzugsweise ein Längslenkerbock ist.

Zu erwähnen ist auch, dass als Verbindungstechnik zwischen den zu verbindenden Elementen z.B. Schraub-, Niet- und/oder Schweißverbindungen zum Einsatz kommen können, aber auch jedwede anderen geeigneten Befestigungstechniken.

Die vorstehend beschriebenen Merkmale und bevorzugten Ausführungsformen der Erfindung sind beliebig miteinander kombinierbar. Andere vorteilhafte Weiterbildungen der Erfindung sind in den Unteransprüchen offenbart oder ergeben sich aus den nachstehenden Beschreibungen bevorzugter Ausführungsformen in Verbindung mit den beigefügten Figuren.
- Fig. 1: zeigt eine perspektivische Ansicht eines Tragbocks gemäß einer Ausführungsform der Erfindung,
- Fig. 2: zeigt eine Seitenansicht auf den Tragbock der Fig. 1,
- Fig. 3: zeigt eine perspektivische Ansicht des Tragbocks der Figuren 1 und 2,
- Fig. 4: zeigt eine perspektivische Ansicht einer Tragkonstruktion für ein Nutzfahrzeug mit zwei Tragböcken gemäß einer Ausführungsform der Erfindung,
- Fig. 5: zeigt eine perspektivische Ansicht der Tragkonstruktion der Fig. 4,
- Fig. 6: zeigt eine Frontalansicht der Tragkonstruktion der Figuren 4 und 5,
- Fig. 7: zeigt eine Draufsicht der Tragkonstruktion der Figuren 4-6,
- Fig. 8: zeigt eine Frontalansicht der Tragkonstruktion der Figuren 4-7 mit skizziertem Kraftflussprinzip,
- Fig. 9: zeigt ein nachteilhaftes Kraftflussprinzip,
- Fig. 10: zeigt eine explosionsartige Frontalansicht einer Tragkonstruktion der Figuren 4-8,
- Fig. 11: zeigt eine Frontalansicht einer Tragkonstruktion gemäß verschiedener Ausführungsformen der Erfindung,
- Fig. 12: zeigt einen Tragbock gemäß einer nicht erfindungsgemäßen Ausführungsform,
- Fig. 13: zeigt einen Teil einer Tragkonstruktion mit Tragböcken gemäß einer nicht erfindungsgemäßen Ausführungsform,
- Fig. 14: zeigt eine Seitenansicht eines Tragbocks einer wiederum anderen Ausführungsform der Erfindung,
- Fig. 15: zeigte eine perspektivische Ansicht eines Tragbocks gemäß einer Ausführungsform der Erfindung,
- Fig. 16: zeigt eine Seitenansicht auf den Tragbock der Figur 15.

Die unter Bezugnahme auf die Figuren beschriebenen Ausführungsformen stimmen teilweise überein, wobei ähnliche oder gleiche Teile mit den gleichen Bezugszeichen versehen sind, und zu deren Erläuterung auch auf die Beschreibung anderer Ausführungsformen oder Figuren verwiesen wird, um Wiederholungen zu vermeiden.

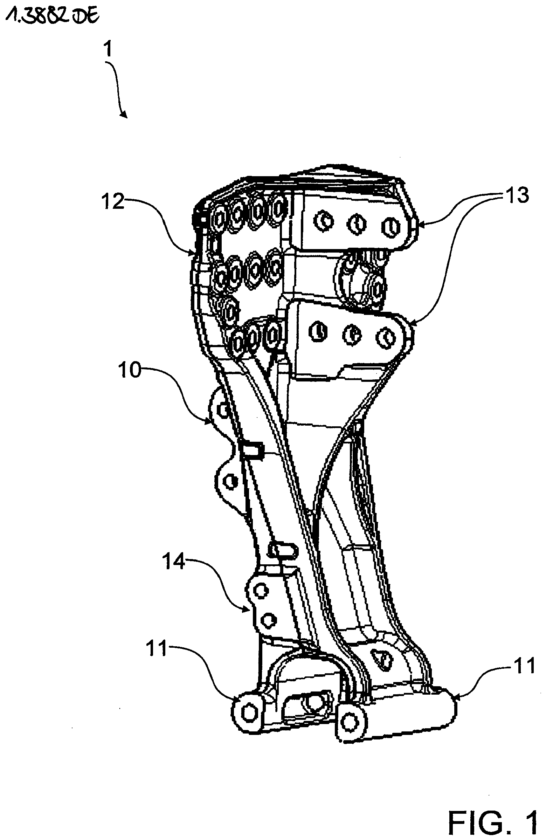

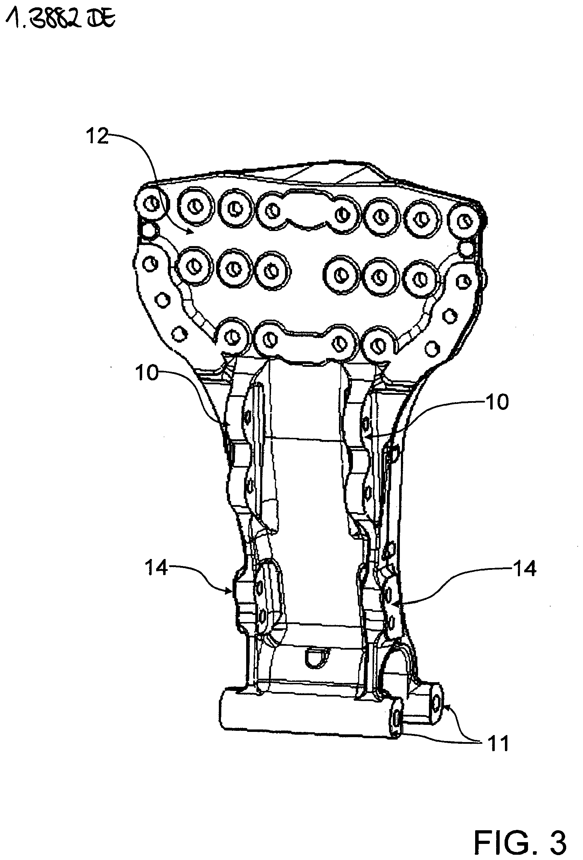

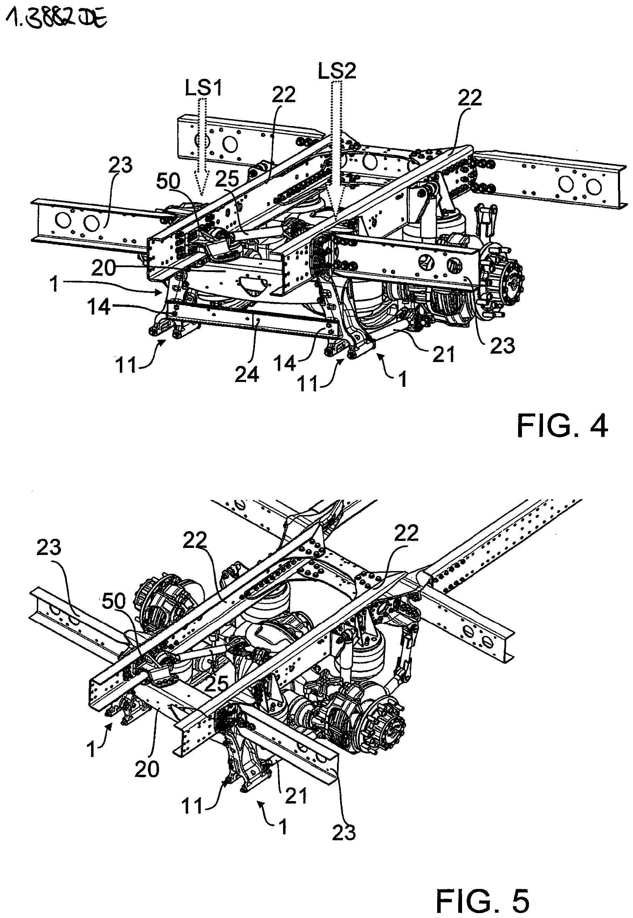

Die Figuren 1-3 zeigen unterschiedliche Ansichten eines Tragbocks 1 gemäß einer Ausführungsform der Erfindung. Der Tragbock 1 ist zur Verwendung in einer z.B. in Figur 4 gezeigten Tragkonstruktion für ein Nutzfahrzeug vorgesehen.

Unter Bezugnahme auf die Figuren 1-3 in Zusammenschau mit z.B. Figur 4 ist der Tragbock 1 konfiguriert, um mittels einer Verbindungseinrichtung 10 mit einem Querträger 20 verbunden zu werden. Der Tragbock 1 umfasst ferner eine Verbindungseinrichtung 11 für eine Längslenkereinrichtung 21, über die die Längslenkereinrichtung an dem Tragbock 1 montierbar ist. Der Tragbock 1 umfasst auch eine Verbindungseinrichtung 12 für einen Längsträger 22, über den der Längsträger 22 an dem Tragbock 1 montierbar ist. Der Tragbock 1 umfasst außerdem eine Verbindungseinrichtung 13 für eine Spantkonstruktion 23 (z.B. ein U-Profil-Träger), über die die Spantkonstruktion 23 an dem Tragbock 1 montierbar ist. Außerdem umfasst der Tragbock 1 eine Verbindungseinrichtung 14 für einen zusätzlichen Querträger 24, über die der Querträger 24 an dem Tragbock 1 montierbar ist. Der Tragbock 1 kann außerdem eine oder mehrere zusätzliche Verbindungseinrichtungen aufweisen, z.B. für einen Dreieckslenker, eine Bremseinrichtung, eine Zusatzverstrebung zur Verstärkung der Tragkonstruktion, etc..

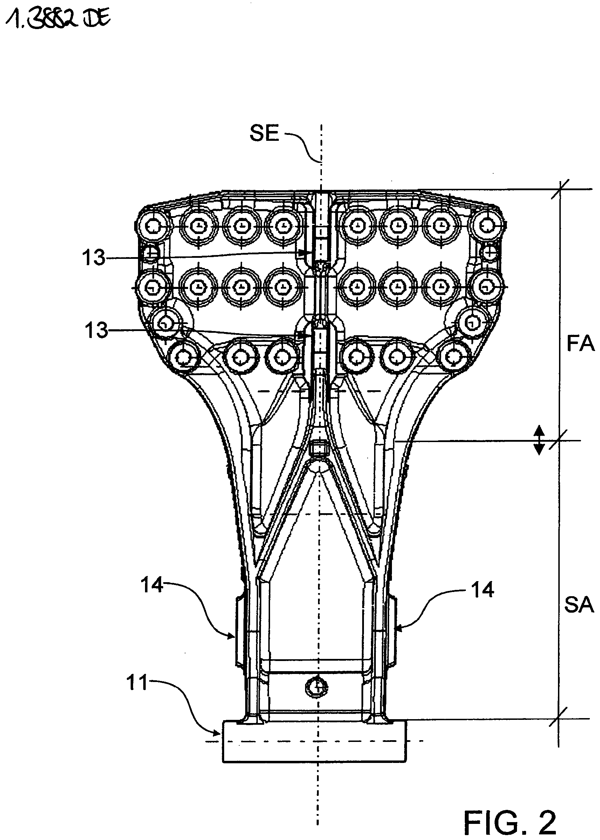

Wie insbesondere aus der Figur 2 ersichtlich wird, ist der Tragbock 1 relativ zu einer Symmetrieebene SE im Wesentlichen symmetrisch ausgeführt, zweckmäßig zumindest so symmetrisch, dass er an beiden Seiten LS1 und LS2 des Querträgers 20 verwendbar ist also zweckmäßig links und rechts in Bezug auf den Querträger 20. Dadurch kann der Querträger 20 mit zwei baugleichen Tragböcken 1 ausgestattet werden.

Bei der vorliegenden Ausführungsform wird die Symmetrieebene SE durch die Verbindungseinrichtung 13 für die Spantkonstruktion 23 definiert, die sich entlang der Mitte des Tragbocks 1 erstreckt. Hingegen ist die Verbindungseinrichtung 10 für den Querträger 20 seitlich beabstandet zu der Symmetrieebene SE, während die Verbindungseinrichtung 11 für die Längslenkereinrichtung 21 sich im Wesentlichen quer zu der Symmetrieebene SE erstreckt. Die Verbindungseinrichtung 12 für den Längsträger 22 ist als Befestigungsfläche ausgebildet, die sich im Wesentlichen quer zu der Symmetrieebene SE erstreckt. Die Verbindungseinrichtung 14 für den zusätzlichen Querträger 24 ist ähnlich wie die Verbindungseinrichtung 10 für den Querträger 20 seitlich beabstandet zu der Symmetrieebene SE. Im Gegensatz zu der als Befestigungsfläche ausgeführten Verbindungseinrichtung 12 für den Längsträger 22 sind die Verbindungseinrichtung 10 für den Querträger 20 und die Verbindungseinrichtung 14 für den zusätzlichen Querträger 24 als Flanschpaar ausgeführt, mit einem Flansch auf der einen Seite der Symmetrieebene SE und einem anderen Flansch auf der anderen Seite der Symmetrieeben SE.

Die Verbindungseinrichtung 13 für die Spantkonstruktion 23 weist zwei höhenmäßig voneinander beabstandete Flanschmittel auf, wodurch Zug- und Druckkräfte definiert aufgenommen und weitergeleitet werden können.

Die Verbindungseinrichtung 10 für den Querträger 20 und die Verbindungseinrichtung 13 für die Spantkonstruktion 23 erstrecken sich in entgegengesetzte Richtungen, während die als Befestigungsfläche ausgeführte Verbindungseinrichtung 12 für den Längsträger 22 sich im Wesentlichen rechtwinklig erstreckt zu der Verbindungseinrichtung 10 für den Querträger 20, der Verbindungseinrichtung 13 für die Spantkonstruktion 23 und der Verbindungseinrichtung 14 für den zusätzlichen Querträger 24. Die Verbindungseinrichtung 10 für den Querträger 20 und die Verbindungseinrichtung 14 für den zusätzlichen Querträger 24 stehen zu der gleichen Seite des Tragbocks 1 ab.

Die Verbindungseinrichtung 10 für den Querträger 20 ist tiefer angeordnet als die Verbindungseinrichtung 13 für die Spantkonstruktion 23 und die Verbindungseinrichtung 12 für den Längsträger 22, wodurch ermöglicht wird, dass der Querträger 20 unter dem Niveau der Spantkonstruktion 23 und unter dem Niveau des Längsträgers 22 verläuft. Die Verbindungseinrichtung 14 für den zusätzlichen Querträger 24 wiederum ist tiefer angeordnet als die Verbindungseinrichtung 10 für den Querträger 20, wodurch ermöglicht wird, dass der zusätzliche Querträger 24 unter dem Niveau des Querträgers 20 verläuft und dadurch den Tragbock 1 oder allgemein die Tragkonstruktion wesentlich verstärken kann.

Der Grundkörper des Tragbocks 1 wird unter Bezugnahme auf die Figur 2 durch einen Stegabschnitt SA und einen im Wesentlichen quer dazu verlaufenden Flanschabschnitt FA definiert, wodurch eine im Wesentlichen T-förmige Gestalt gebildet wird. Der Übergang zwischen dem Stegabschnitt SA und dem Flanschabschnitt FA kann im Rahmen der Erfindung klassisch T-förmig oder fließend ausgeführt sein.

Der Grundkörper des Tragbocks 1 oder allgemein der Tragbock 1 ist als Gussteil ausgeführt, an dem im Rahmen der Erfindung aber durchaus Zusatzelemente montiert sein können, z.B. durch Schraub-, Niet- oder Schweißverbindungen.

Die Figuren 4-7 zeigen verschiedene Ansichten einer Tragkonstruktion für ein Nutzfahrzeug gemäß einer Ausführungsform der Erfindung. Die Tragkonstruktion ist als Rahmen- oder Lenkkonstruktion, insbesondere Längslenkerkonstruktion, für das Nutzfahrzeug ausgeführt.

Unter Bezugnahme auf die Figuren 4-7 umfasst die Tragkonstruktion den Querträger 20. Bezugszeichen LS1 kennzeichnet die eine Seite des Querträgers 20 (in Figur 4 z.B. die linke Seite) und LS2 kennzeichnet die andere Seite des Querträgers 20 (in Figur 4 z.B. die rechte Seite). Der Querträger 20 umfasst an seinen beiden Seiten LS1 und LS2 jeweils einen baugleichen Tragbock 1, der gemäß den Figuren 1-3 ausgeführt sein kann.

Die Tragkonstruktion umfasst außerdem Längslenkereinrichtungen 21, die über die Verbindungseinrichtungen 11 mit den Tragböcken 1 verbunden sind. Außerdem umfasst die Tragkonstruktion Längsträger 22, die über die Verbindungseinrichtungen 12 mit den Tragböcken 1 verbunden sind. Außerdem umfasst die Tragkonstruktion Spantkonstruktionen 23, die über die Verbindungseinrichtungen 13 mit den Tragböcken 1 verbunden sind. Ferner umfasst die Tragkonstruktion einen zusätzlichen Querträger 24, der über die Verbindungseinrichtungen 14 mit den Tragböcken 1 verbunden ist. Die Spantkonstruktionen 23 und der Querträger 20 erstrecken sich parallel und bilden vorzugsweise zusammen mit dem zusätzlichen Querträger 24 einen Querträgerverband, während die Längsträger 22 quer dazu verlaufen. Die Längsträger 22, die Spantkonstruktionen 23 und der zusätzliche Querträger 24 sind als U-Profile ausgeführt, während der Querträger 20 als T-Profil mit vorzugsweise variierender Höhe ausgeführt ist. Der Querträger 20 kann aber auch z.B. als U-Profil, T- oder Doppel T-Profil ausgeführt sein.

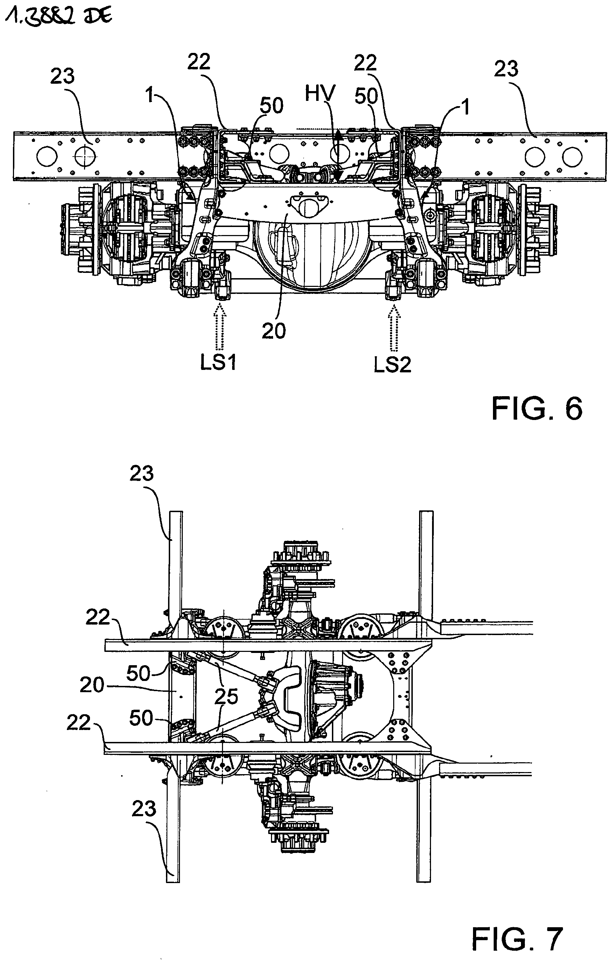

Der Querträger 20 verläuft so unter dem Niveau der Längsträger 22 und unter dem Niveau der Spantkonstruktionen 23, dass ein Höhenversatz HV (siehe Figur 6) erzeugt wird. In dem Höhenversatz HV sind Stützeinrichtungen 50 angeordnet, die die Tragböcke 1 aussteifen und zusätzlich als Tragböcke für eine Dreieckslenkereinrichtung 25 dienen. Die Stützeinrichtungen 50 sind zwischen dem Niveau der Oberkante des Querträgers 20 und dem Niveau der Oberkante(n) der Längsträger 22 und der Spantkonstruktionen 23 angeordnet.

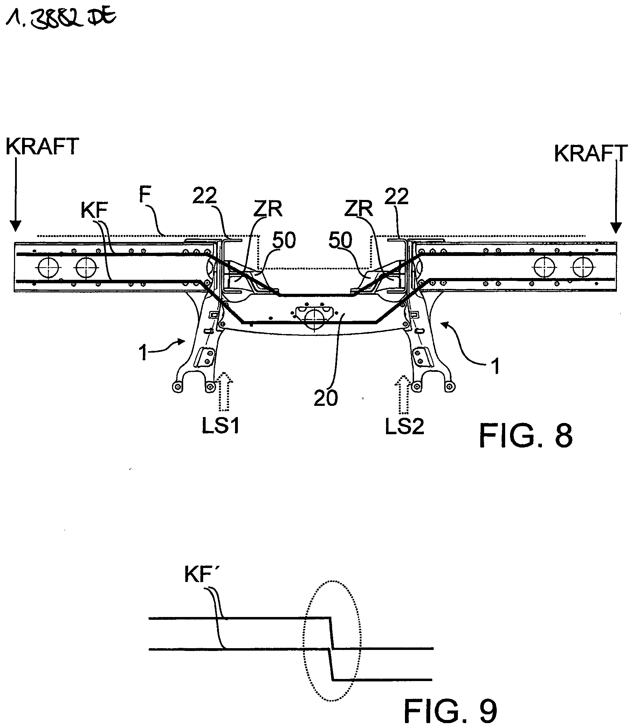

Figur 8 zeigt eine Frontalansicht eines Teils der in den Figuren 4 bis 7 gezeigten Tragkonstruktion. In Figur 8 ist schematisch der Fußboden F des Nutzfahrzeugs angedeutet. Zu sehen ist außerdem, dass die Stützeinrichtungen 50 jeweils mittels eines Zwischenraums ZR abschnittsweise von dem Querträger 20 beabstandet sind.

Insbesondere aber zeigt Figur 8 schematisch ein Kraftflussprinzip KF, das durch die Tragkonstruktion realisierbar ist. Durch die in dem Höhenversatz HV angeordneten Stützeinrichtungen 50 werden die Tragböcke 1 ausgesteift. Insbesondere wird ein tragwerkstechnisch ungünstiger, sprunghafter Kraftfluss KF', wie in Figur 9 schematisch gezeigt, der ohne die Stützeinrichtungen 50 auftreten würde, zumindest reduziert und geglättet, wodurch eine sanftere Kraftflussänderung realisiert werden kann. Dadurch können natürlich auch Spannungsspitzen minimiert werden. Die Stützeinrichtungen 50 stützen somit den sprunghaften Knick ab und ermöglichen eine tragwerkstechnisch verbesserte, insbesondere sanfte Kraftflussänderung.

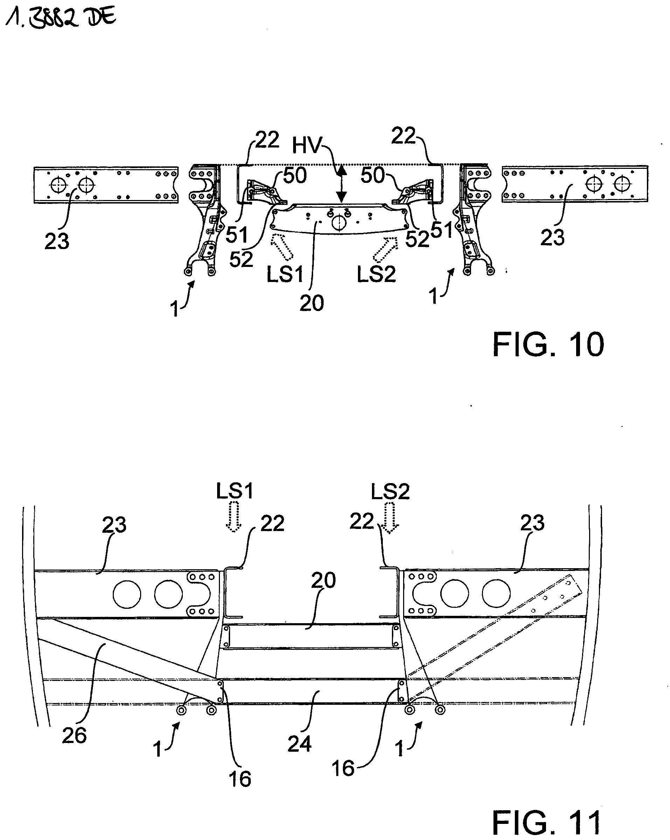

Figur 10 zeigt eine explosionsartige Frontalansicht der zuvor beschriebenen Ausführungsform der Figuren 4-8. Zu sehen ist mitunter, dass die Stützeinrichtungen 50 jeweils eine Befestigungsfläche 51 aufweisen, um an die Längsträger 22, insbesondere dessen Stegabschnitte, befestigt zu werden, und eine Befestigungsfläche 52, um an den Querträger 20, insbesondere dessen Flanschabschnitt, befestigt zu werden. Zu erwähnen ist, dass die Stützeinrichtungen 50 an den Steg- und/oder Flanschabschnitten des Querträgers 20 befestigt werden können.

Figur 11 zeigt eine Frontalansicht einer Tragkonstruktion gemäß einer anderen Ausführungsform der Erfindung. Eine Besonderheit dieser Tragkonstruktion ist, dass sie Zusatzverstrebungen 26 zu ihrer Verstärkung umfasst, die einerseits über die Verbindungseinrichtungen 16 mit den Tragböcken 1 und andererseits mit den Spantkonstruktionen 23 und/oder dem Nutzfahrzeugaufbau (z.B. einer Seitenwand oder einer Seitensäule davon) verbunden sein können.

Es ist aber auch möglich, dass der zusätzliche Querträger 24 durch die Tragböcke 1 oder an den Tragböcken 1 einstückig vorbeigeführt wird, um mit dem Nutzfahrzeugaufbau verbunden zu werden, und somit zweckmäßig die Funktion der Zusatzverstrebungen 26 übernimmt. Die Zusatzverstrebungen 26 können, wie in Figur 11 zu sehen, parallel oder schräg zu dem Querträger 20 und den Spantkonstruktionen 23 verlaufen.

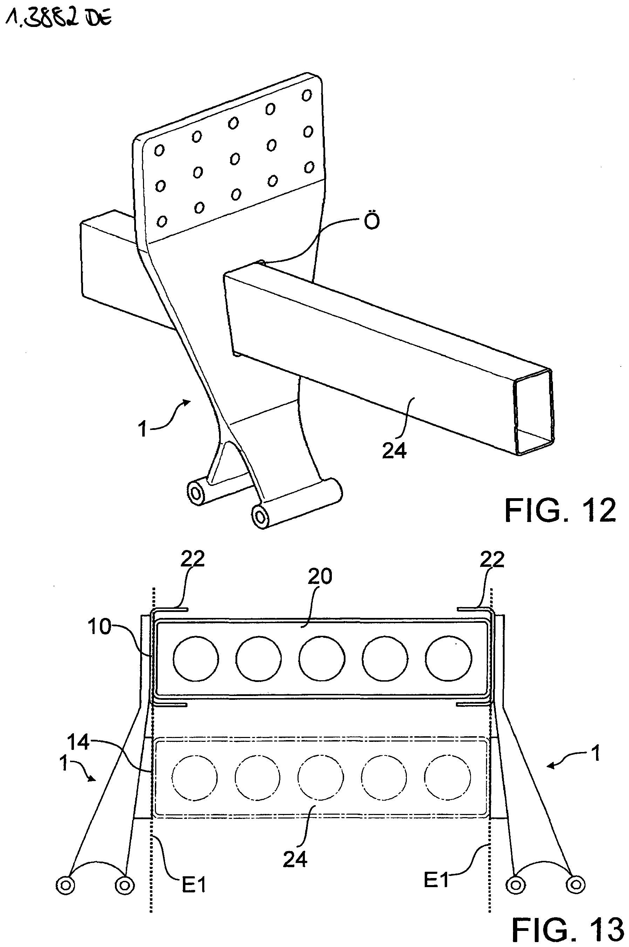

Figur 12 zeigt eine perspektivische Ansicht eines Tragbocks 1 gemäß einer nicht erfindungsgemäßen Ausführungsform. Eine Besonderheit dieses Tragbocks 1 ist eine Durchlassöffnung Ö, durch die ein zusätzlicher Querträger 24 durch den Tragbock 1 hindurchgeführt werden kann, um mit dem Nutzfahrzeugaufbau und/oder dem Tragbock 1 verbunden zu werden.

Figur 13 zeigt eine Frontalansicht einer Tragkonstruktion und Tragböcken 1 gemäß einer nicht erfindungsgemäßen Ausführungsform. Eine Besonderheit dieser Ausführungsform ist, dass die Verbindungseinrichtung 10 für den Querträger 20 und die Verbindungseinrichtung 14 für den zusätzlichen Querträger 24 so in einer Ebene E1 angeordnet sind, dass der Querträger 10 und der zusätzliche Querträger 24 gleich breit oder sogar baugleich ausgeführt sein können.

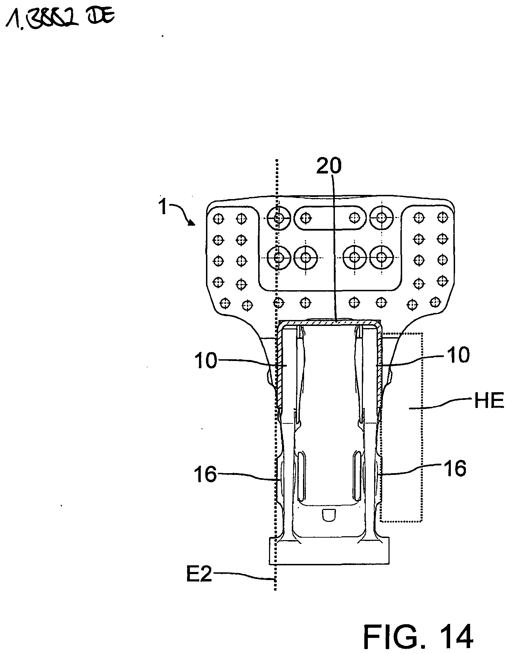

Figur 14 zeigt eine Seitenansicht einer Tragkonstruktion mit einem Tragbock 1 gemäß einer anderen Ausführungsform der Erfindung. Eine Besonderheit dieser Ausführungsform ist, dass die Verbindungseinrichtung 10 für den Querträger 20 und die Verbindungseinrichtung 16 für das zusätzliche Funktionsteil zueinander seitlich derart beabstandet sind, dass nach Montage des Querträgers 20 an die Verbindungseinrichtung 10 die Oberfläche des Querträgers 20 und die Oberfläche der Verbindungseinrichtung 16 eine Ebene E2 bilden. Vorteilhaft darin ist, dass auf der Ebene E2 z.B. eine weitere Halteeinrichtung oder eine anderes geeignetes Funktionsteil HE befestigt werden kann, ohne dass Distanzstücke verwendet werden müssen.

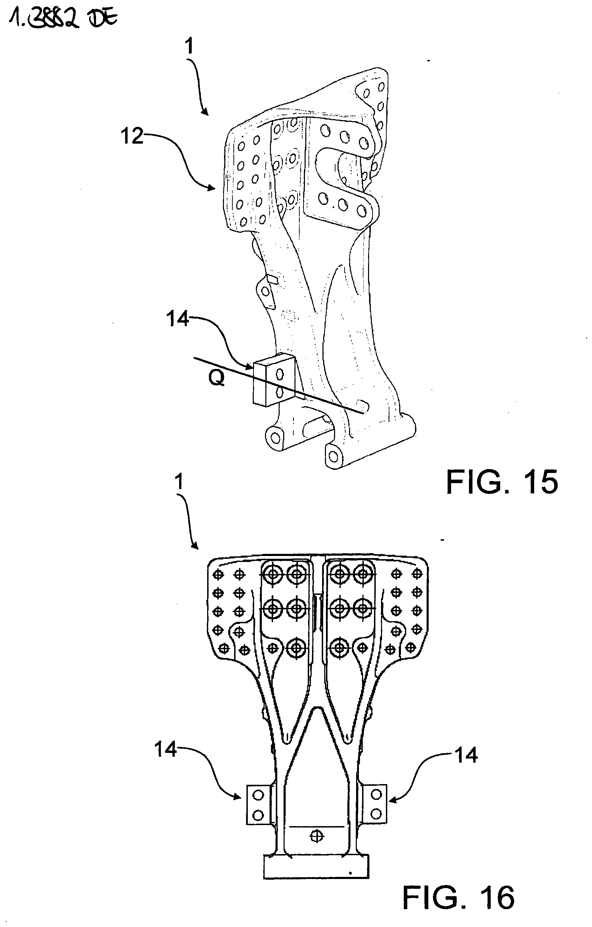

Figur 15 zeigt eine perspektivische Ansicht eines wiederum anderen Tragbocks 1 gemäß einer Ausführungsform der Erfindung, während Figur 16 eine Seitenansicht des Tragbocks 1 aus Figur 15 zeigt.

Eine Besonderheit des Tragbocks 1 ist, dass er zusätzliche Verbindungseinrichtungen 14 aufweist, die als Flanschkonstruktion (z.B. Flanschmittel) ausgeführt sind und die jeweils zumindest eine Befestigungsfläche aufweisen, die sich vertikal erstreckt und die in Querrichtung Q weist, wodurch sie im Wesentlichen parallel zu der Längserstreckung des Längsträgers 22 und/oder im Wesentlichen rechtwinklig zu der Längserstreckung des Querträgers 20 ausgerichtet ist.

## Patentansprüche

1. Tragbock (1) für eine einen Querträger (20) umfassende Tragkonstruktion für ein Kraftfahrzeug, insbesondere Rahmen- oder Lenkkonstruktion, vorzugsweise für ein Nutzfahrzeug, mit einer Verbindungseinrichtung (10) für den Querträger (20), **wobei** der Tragbock (1) so ausgebildet ist, dass er an beiden Seiten (LS1, LS2) des Querträgers (20) verwendbar ist, und mit zumindest einer zusätzlichen Verbindungseinrichtung (12, 14), die zumindest eine Befestigungsfläche aufweist, die zumindest ungefähr rechtwinklig zu der Längserstreckung des Querträgers (20) ausgerichtet ist und sich vorzugsweise vertikal erstreckt, **dadurch gekennzeichnet, dass**
der Tragbock (1) eine Verbindungseinrichtung (13) für eine Spantkonstruktion (23) aufweist, wobei die Verbindungseinrichtung (10) für den Querträger (20) und die Verbindungseinrichtung (13) für die Spantkonstruktion (23) sich in unterschiedliche Richtungen erstrecken.

2. Tragbock (1) nach Anspruch 1, **dadurch gekennzeichnet, dass** der Tragbock (1) relativ zu einer Symmetrieebene (SE) zumindest so nahezu symmetrisch ausgeführt ist, dass er an beiden Seiten (LS1, LS2) des Querträgers (20) verwendbar ist.

3. Tragbock (1) nach einem der vorhergehenden Ansprüche, **gekennzeichnet durch** zumindest eines von Folgenden:
- eine Verbindungseinrichtung (11) für eine Längslenkereinrichtung (21),
- eine Verbindungseinrichtung (12) für einen Längsträger (22),
- eine Verbindungseinrichtung (14) für zumindest einen zusätzlichen Querträger (24),
- eine Verbindungseinrichtung für eine Lenkeinrichtung, insbesondere eine Dreieckslenkereinrichtung (25),
- zumindest eine Verbindungseinrichtung (16) für zumindest ein zusätzliches Funktionsteil, vorzugsweise eine Bremseinrichtung und/oder eine Zusatzverstrebung (26) zur Verstärkung der Tragkonstruktion.

4. Tragbock (1) nach einem der vorhergehenden Ansprüche, **dadurch gekennzeichnet, dass** die Verbindungseinrichtung (13) für die Spantkonstruktion (23) die Symmetrieebene (SE) definiert.

5. Tragbock (1) nach einem der vorhergehenden Ansprüche, **gekennzeichnet durch** zumindest eines von Folgenden:
- die Verbindungseinrichtung (10) für den Querträger (20) ist seitlich beabstandet zu der Symmetrieebene (SE),
- die Verbindungseinrichtung (11) für die Längslenkereinrichtung (21) erstreckt sich im Wesentlichen quer zu der Symmetrieebene (SE),
- die Verbindungseinrichtung (12) für den Längsträger (22) ist als Befestigungsfläche ausgebildet ist, die sich im Wesentlichen quer zu der Symmetrieebene (SE) erstreckt,
- die Verbindungseinrichtung (14) für zumindest einen zusätzlichen Querträger (24) ist seitlich beabstandet zu der Symmetrieebene (SE).

6. Tragbock (1) nach einem der vorhergehenden Ansprüche, **dadurch gekennzeichnet, dass** zumindest eine Verbindungseinrichtung als Flanschkonstruktion ausgeführt ist, die vorzugsweise vom Grundkörper des Tragbocks (1) absteht, insbesondere im Wesentlichen rechtwinklig und/oder im Wesentlichen parallel zu dem Längsträger (22).

7. Tragbock (1) nach einem der vorhergehenden Ansprüche, **dadurch gekennzeichnet, dass** zumindest eine Verbindungseinrichtung eine Öffnung (Ö) umfasst, in die das zu verbindende Element einsetzbar ist oder durch die das zu verbindende Element durchführbar ist.

8. Tragbock (1) nach einem der vorhergehenden Ansprüche, **dadurch gekennzeichnet, dass** die Verbindungseinrichtung (13) für die Spantkonstruktion (23) zwei höhenmäßig voneinander beabstandete Flanschmittel aufweist, wodurch Zug- und Druckkräfte definiert weiterleitbar sind.

9. Tragbock (1) nach einem der vorhergehenden Ansprüche, **dadurch gekennzeichnet, dass** die Verbindungseinrichtung (10) für den Querträger (20) und/oder die Verbindungseinrichtung (14) für zumindest einen zusätzlichen Querträger (24) zwei relativ zu der Symmetrieebene (SE) seitlich voneinander beabstandete Flanschmittel aufweist.

10. Tragbock (1) nach einem der vorhergehenden Ansprüche, **dadurch gekennzeichnet, dass**
- die Verbindungseinrichtung (10) für den Querträger (20) und die Verbindungseinrichtung (13) für die Spantkonstruktion (23) sich in entgegengesetzte Richtungen erstrecken, und/oder
- die Verbindungseinrichtung (12) für den Längsträger (22) als Befestigungsfläche ausgeführt ist, die sich im Wesentlichen rechtwinklig erstreckt zu der Verbindungseinrichtung (10) für den Querträger (20), der Verbindungseinrichtung (13) für die Spantkonstruktion (23) und/oder der Verbindungseinrichtung (14) für den zusätzlichen Querträger (24).

11. Tragbock (1) nach Anspruch 9 oder 10, **dadurch gekennzeichnet, dass** die Verbindungseinrichtung (10) für den Querträger (20) und die Verbindungseinrichtung (14) für den zusätzlichen Querträger (24) zu der gleichen Seite relativ zu dem Tragbock (1) abstehen und/oder so in einer Ebene (E1) angeordnet sind, dass der Querträger (10) und der zusätzliche Querträger (14) gleich breit oder sogar baugleich ausgeführt sein können.

12. Tragbock (1) nach einem der vorhergehenden Ansprüche, **dadurch gekennzeichnet, dass**
- die Verbindungseinrichtung (10) für den Querträger (20) und die Verbindungseinrichtung (16) für das zusätzliche Funktionsteil in einer Ebene angeordnet sind, oder
- die Verbindungseinrichtung (10) für den Querträger (20) und die Verbindungseinrichtung (16) für das zusätzliche Funktionsteil zueinander seitlich beabstandet sind, vorzugsweise so, dass nach Anbinden des Querträgers (20) an die Verbindungseinrichtung (10) die Oberfläche des Querträgers (20) und die Oberfläche der Verbindungseinrichtung (16) für das zusätzliche Funktionsteil eine Ebene (E2) bilden.

13. Tragbock (1) nach einem der vorhergehenden Ansprüche, **dadurch gekennzeichnet, dass** die Verbindungseinrichtung (10) für den Querträger (20) tiefer angeordnet ist als die Verbindungseinrichtung (13) für die Spantkonstruktion (23) und/oder die Verbindungseinrichtung (12) für den Längsträger (22), vorzugsweise um zu ermöglichen, dass der Querträger (20) unter dem Niveau der Spantkonstruktion (23) und/oder unter dem Niveau des Längsträgers (22) verläuft.

14. Tragbock (1) nach einem der Ansprüche 9 bis 13, **dadurch gekennzeichnet, dass** die Verbindungseinrichtung (14) für den zusätzlichen Querträger (24) tiefer angeordnet ist als die Verbindungseinrichtung (10) für den Querträger (20).

15. Tragbock (1) nach einem der vorhergehenden Ansprüche, **dadurch gekennzeichnet, dass** der Grundkörper des Tragbocks (1) durch einen Stegabschnitt (SA) und einen vorzugsweise im Wesentlichen quer dazu verlaufenden Flanschabschnitt (FA) definiert wird, die vorzugsweise eine im Wesentlichen T-förmige Gestalt bilden.

16. Tragbock (1) nach einem der vorhergehenden Ansprüche, **dadurch gekennzeichnet, dass** zumindest der Grundkörper des Tragbocks (1) als Gussteil ausgeführt ist.

17. Tragkonstruktion, insbesondere Rahmen- oder Lenkkonstruktion, für ein Kraftfahrzeug, vorzugsweise Nutzfahrzeug, mit zwei Tragböcken (1), die an beiden Seiten (LS1, LS2) eines Querträgers (20) angeordnet sind, **dadurch gekennzeichnet, dass** die Tragböcke (1) nach einem der vorhergehenden Ansprüche ausgebildet sind.

18. Tragkonstruktion nach Anspruch 17, **gekennzeichnet durch** mit den Tragböcken (1) verbundene Längsträger (22) und/oder Spantkonstruktionen (23), wobei der Querträger (20) unter dem Niveau der Längsträger (22) und/oder unter dem Niveau der Spantkonstruktionen (23) verläuft und dadurch ein Höhenversatz (HV) erzeugt wird.

19. Tragkonstruktion nach Anspruch 18, **gekennzeichnet durch** Stützeinrichtungen (50), die zwischen dem Querträger (20) und den Längsträgern (22) und/oder den Spantkonstruktionen (23) angeordnet sind und/oder die zumindest abschnittsweise innerhalb des Höhenversatzes (HV) angeordnet sind, um die Tragböcke (1) auszusteifen und/oder um einen sprunghaften Kraftfluss (KF'), der ansonsten durch den Höhenversatz (HV) auftreten würde, zumindest zu reduzieren oder zu glätten, wodurch vorzugsweise eine sanftere Kraftflussrichtungsänderung realisierbar ist.

20. Tragkonstruktion nach Anspruch 19, **dadurch gekennzeichnet, dass** die Stützeinrichtungen (50) als Tragböcke für eine Lenkeinrichtung dienen, insbesondere eine Dreieckslenkereinrichtung (25).

## Claims

1. Support bracket (1) for a support structure, comprising a crossmember (20), for a motor vehicle, in particular a frame or steering structure, preferably for a utility vehicle, having a connecting device (10) for the crossmember (20), **wherein** the support bracket (1) is designed in such a way that it can be used on both sides (LS1, LS2) of the crossmember (20), and has at least one additional connecting device (12, 14), which has at least one fastening surface which is oriented at least approximately at right angles to the longitudinal extent of the crossmember (20) and preferably extends vertically, **characterized in that** the support bracket (1) has a connecting device (13) for a rib structure (23), wherein the connecting device (10) for the crossmember (20) and the connecting device (13) for the rib structure (23) extend in different directions.

2. Support bracket (1) according to Claim 1, **characterized in that** the support bracket (1) is configured such that it is at least so nearly symmetrical relative to a plane of symmetry (SE) that it can be used on both sides (LS1, LS2) of the crossmember (20).

3. Support bracket (1) according to either of the preceding claims, **characterized by** at least one of the following:
- a connecting device (11) for a longitudinal control arm device (21),
- a connecting device (12) for a longitudinal member (22),
- a connecting device (14) for at least one additional crossmember (24),
- a connecting device for a steering device, in particular a wishbone device (25),
- at least one connecting device (16) for at least one additional functional part, preferably a braking device and/or an additional brace (26) for reinforcing the support structure.

4. Support bracket (1) according to one of the preceding claims, **characterized in that** the connecting device (13) for the rib structure (23) defines the plane of symmetry (SE).

5. Support bracket (1) according to one of the preceding claims, **characterized by** at least one of the following:
- the connecting device (10) for the crossmember (20) is laterally spaced apart from the plane of symmetry (SE),
- the connecting device (11) for the longitudinal control arm device (21) extends substantially transversely to the plane of symmetry (SE),
- the connecting device (12) for the longitudinal member (22) is designed as a fastening surface which extends substantially transversely to the plane of symmetry (SE),
- the connecting device (14) for at least one additional crossmember (24) is laterally spaced apart from the plane of symmetry (SE).

6. Support bracket (1) according to one of the preceding claims, **characterized in that** at least one connecting device is configured as a flange structure which preferably projects from the main body of the support bracket (1), in particular substantially at right angles and/or substantially parallel to the longitudinal member (22).

7. Support bracket (1) according to one of the preceding claims, **characterized in that** at least one connecting device comprises an opening (Ö) into which the element to be connected can be inserted or through which the element to be connected can be passed.

8. Support bracket (1) according to one of the preceding claims, **characterized in that** the connecting device (13) for the rib structure (23) has two flange means spaced apart from one another vertically, as a result of which tensile and compressive forces can be transmitted in a defined manner.

9. Support bracket (1) according to one of the preceding claims, **characterized in that** the connecting device (10) for the crossmember (20) and/or the connecting device (14) for at least one additional crossmember (24) have/has two flange means that are spaced apart from one another laterally in relation to the plane of symmetry (SE).

10. Support bracket (1) according to one of the preceding claims, **characterized in that**
- the connecting device (10) for the crossmember (20) and the connecting device (13) for the frame structure (23) extend in different directions, and/or
- the connecting device (12) for the longitudinal member (22) is configured as a fastening surface which extends substantially at right angles to the connecting device (10) for the crossmember (20), to the connecting device (13) for the rib structure (23) and/or to the connecting device (14) for the additional crossmember (24).

11. Support bracket (1) according to Claim 9 or 10, **characterized in that** the connecting device (10) for the crossmember (20) and the connecting device (14) for the additional crossmember (24) project on the same side in relation to the support bracket (1) and/or are arranged in a plane (E1) in such a way that the crossmember (10) and the additional crossmember (14) can be configured such that they are of the same width or even of identical construction.

12. Support bracket (1) according to one of the preceding claims, **characterized in that**
- the connecting device (10) for the crossmember (20) and the connecting device (16) for the additional functional part are arranged in one plane, or
- the connecting device (10) for the crossmember (20) and the connecting device (16) for the additional functional part are laterally spaced apart from one another, preferably in such a way that, once the crossmember (20) has been attached to the connecting device (10), the surface of the crossmember (20) and the surface of the connecting device (16) for the additional functional part form one plane (E2).

13. Support bracket (1) according to one of the preceding claims, **characterized in that** the connecting device (10) for the crossmember (20) is arranged lower than the connecting device (13) for the rib structure (23) and/or the connecting device (12) for the longitudinal member (22), preferably in order to enable the crossmember (20) to run below the level of the rib structure (23) and/or below the level of the longitudinal member (22).

14. Support bracket (1) according to one of Claims 9 to 13, **characterized in that** the connecting device (14) for the additional crossmember (24) is arranged lower than the connecting device (10) for the crossmember (20) .

15. Support bracket (1) according to one of the preceding claims, **characterized in that** the main body of the support bracket (1) is defined by a web portion (SA) and by a flange portion (FA) running preferably substantially transversely thereto, which preferably form a substantially T-shaped configuration.

16. Support bracket (1) according to one of the preceding claims, **characterized in that** at least the main body of the support bracket (1) is configured as a cast part.

17. Support structure, in particular a frame or steering structure, for a motor vehicle, preferably a utility vehicle, having two support brackets (1) which are arranged on both sides (LS1, LS2) of a crossmember (20), **characterized in that** the support brackets (1) are designed according to one of the preceding claims.

18. Support structure according to Claim 17, **characterized by** longitudinal members (22) and/or rib structures (23) connected to the support brackets (1), wherein the crossmember (20) runs below the level of the longitudinal members (22) and/or below the level of the rib structures (23), and as a result of which a vertical offset (HV) is produced.

19. Support structure according to Claim 18, **characterized by** supporting devices (50) which are arranged between the crossmember (20) and the longitudinal members (22) and/or the rib structures (23) and/or are arranged at least in certain portions within the vertical offset (HV), in order to reinforce the support brackets (1) and/or to at least reduce or smooth a step-like force flow (KF') which would otherwise occur due to the vertical offset (HV), as a result of which preferably a gentler change in the direction of force flow can be realized.

20. Support structure according to Claim 19, **characterized in that** the supporting devices (50) serve as support brackets for a steering device, in particular a wishbone device (25).

## Revendications

1. Support (1) pour une structure porteuse comportant une traverse (20) pour un véhicule automobile, en particulier une structure de châssis ou de direction, de préférence pour un véhicule utilitaire, comportant un dispositif de liaison (10) pour la traverse (20), le support (1) étant formé de telle sorte qu'il peut être utilisé sur les deux côtés (LS1, LS2) de la traverse (20), et comportant au moins un dispositif de liaison supplémentaire (12, 14) qui comprend au moins une surface de fixation qui est orientée au moins approximativement perpendiculairement à l'étendue longitudinale de la traverse (20) et s'étend de préférence verticalement, **caractérisé en ce que**
le support (1) comprend un dispositif de liaison (13) pour une structure de membrure (23), le dispositif de liaison (10) pour la traverse (20) et le dispositif de liaison (13) pour la structure de membrure (23) s'étendant dans des directions différentes.

2. Support (1) selon la revendication 1, **caractérisé en ce que** le support (1) est réalisé de manière au moins presque symétrique par rapport à un plan de symétrie (SE), de telle sorte qu'il peut être utilisé sur les deux côtés (LS1, LS2) de la traverse (20).

3. Support (1) selon l'une des revendications précédentes, **caractérisé par** au moins l'un des éléments suivants :
- un dispositif de liaison (11) pour un dispositif de bras oscillant longitudinal (21),
- un dispositif de liaison (12) pour un longeron (22),
- un dispositif de liaison (14) pour au moins une traverse supplémentaire (24),
- un dispositif de liaison pour un dispositif de direction, en particulier un dispositif de bras de suspension triangulaire (25),
- au moins un dispositif de liaison (16) pour au moins une partie fonctionnelle supplémentaire, de préférence un dispositif de freinage et/ou un entretoisement supplémentaire (26) pour le renforcement de la structure porteuse.

4. Support (1) selon l'une des revendications précédentes, **caractérisé en ce que** le dispositif de liaison (13) pour la structure de membrure (23) définit le plan de symétrie (SE).

5. Support (1) selon l'une des revendications précédentes, **caractérisé par** au moins l'un des faits suivants :
- le dispositif de liaison (10) pour la traverse (20) est espacé latéralement du plan de symétrie (SE),
- le dispositif de liaison (11) pour le dispositif de bras oscillant longitudinal (21) s'étend sensiblement transversalement au plan de symétrie (SE),
- le dispositif de liaison (12) pour le longeron (22) est formé en tant que surface de fixation qui s'étend sensiblement transversalement au plan de symétrie (SE),
- le dispositif de liaison (14) pour au moins une traverse supplémentaire (24) est espacé latéralement du plan de symétrie (SE).

6. Support (1) selon l'une des revendications précédentes, **caractérisé en ce qu'**au moins un dispositif de liaison est réalisé sous forme de structure d'aile qui fait saillie de préférence à partir du corps de base du support (1), en particulier sensiblement perpendiculairement et/ou sensiblement parallèlement au longeron (22).

7. Support (1) selon l'une des revendications précédentes, **caractérisé en ce qu'**au moins un dispositif de liaison comprend une ouverture (Ö) dans laquelle l'élément à relier peut être inséré ou à travers laquelle l'élément à relier peut être guidé.

8. Support (1) selon l'une des revendications précédentes, **caractérisé en ce que** le dispositif de liaison (13) pour la structure de membrure (23) comprend deux moyens formant ailes espacés l'un de l'autre en hauteur, de sorte que des forces de traction et de compression peuvent être transmises de manière définie.

9. Support (1) selon l'une des revendications précédentes, **caractérisé en ce que** le dispositif de liaison (10) pour la traverse (20) et/ou le dispositif de liaison (14) pour au moins une traverse supplémentaire (24) comprennent deux moyens formant ailes espacés latéralement l'un de l'autre par rapport au plan de symétrie (SE).

10. Support (1) selon l'une des revendications précédentes, **caractérisé en ce que**
- le dispositif de liaison (10) pour la traverse (20) et le dispositif de liaison (13) pour la structure de membrure (23) s'étendent dans des sens opposés, et/ou
- le dispositif de liaison (12) pour le longeron (22) est réalisé en tant que surface de fixation qui s'étend sensiblement perpendiculairement par rapport au dispositif de liaison (10) pour la traverse (20), au dispositif de liaison (13) pour la structure de membrure (23) et/ou au dispositif de liaison (14) pour la traverse supplémentaire (24).

11. Support (1) selon la revendication 9 ou 10, **caractérisé en ce que** le dispositif de liaison (10) pour la traverse (20) et le dispositif de liaison (14) pour la traverse supplémentaire (24) font saillie du même côté par rapport au support (1) et/ou sont disposés dans un plan (E1) de telle sorte que la traverse (10) et la traverse supplémentaire (14) peuvent être réalisées de manière à présenter la même largeur ou même une construction identique.

12. Support (1) selon l'une des revendications précédentes, **caractérisé en ce que**
- le dispositif de liaison (10) pour la traverse (20) et le dispositif de liaison (16) pour la partie fonctionnelle supplémentaire sont disposés dans un plan, ou
- le dispositif de liaison (10) pour la traverse (20) et le dispositif de liaison (16) pour la partie fonctionnelle supplémentaire sont espacés latéralement l'un de l'autre, de préférence de telle sorte qu'après la liaison de la traverse (20) au dispositif de liaison (10), la surface de la traverse (20) et la surface du dispositif de liaison (16) pour la partie fonctionnelle supplémentaire forment un plan (E2).

13. Support (1) selon l'une des revendications précédentes, **caractérisé en ce que** le dispositif de liaison (10) pour la traverse (20) est disposé plus bas que le dispositif de liaison (13) pour la structure de membrure (23) et/ou que le dispositif de liaison (12) pour le longeron (22), de préférence pour permettre à la traverse (20) de s'étendre en dessous du niveau de la structure de membrure (23) et/ou en dessous du niveau du longeron (22).

14. Support (1) selon l'une des revendications 9 à 13, **caractérisé en ce que** le dispositif de liaison (14) pour la traverse supplémentaire (24) est disposé plus bas que le dispositif de liaison (10) pour la traverse (20).

15. Support (1) selon l'une des revendications précédentes, **caractérisé en ce que** le corps de base du support (1) est défini par une partie âme (SA) et une partie aile (FA) s'étendant de préférence sensiblement transversalement à celle-ci, lesquelles parties forment de préférence une configuration sensiblement en forme de T.

16. Support (1) selon l'une des revendications précédentes, **caractérisé en ce qu'**au moins le corps de base du support (1) est réalisé en tant que pièce en fonte.

17. Structure porteuse, en particulier structure de châssis ou de direction, pour un véhicule automobile, de préférence un véhicule utilitaire, comportant deux supports (1) qui sont disposés sur les deux côtés (LS1, LS2) d'une traverse (20), **caractérisée en ce que** les supports (1) sont formés selon l'une des revendications précédentes.

18. Structure porteuse selon la revendication 17, **caractérisée par** des longerons (22) et/ou des structures de membrure (23) reliés aux supports (1), la traverse (20) s'étendant en dessous du niveau des longerons (22) et/ou en dessous du niveau des structures de membrure (23) et un décalage en hauteur (HV) étant ainsi produit.

19. Structure porteuse selon la revendication 18, **caractérisée par** des dispositifs d'appui (50) qui sont disposés entre la traverse (20) et les longerons (22) et/ou les structures de membrure (23) et/ou qui sont disposés au moins dans certaines zones à l'intérieur du décalage en hauteur (HV), afin de raidir les supports (1) et/ou afin d'au moins réduire ou lisser un flux de force discontinu (KF') qui se produirait autrement à travers le décalage en hauteur (HV), de sorte qu'une variation de direction du flux de force plus douce puisse de préférence être réalisée.

20. Structure porteuse selon la revendication 19, **caractérisée en ce que** les dispositifs d'appui (50) servent de supports pour un dispositif de direction, en particulier un dispositif de bras de suspension triangulaire (25).
